# EUROPEAN PATENT APPLICATION

(11) **EP 2 256 710 A1**
(43) Date of publication of application: **01.12.2010**
(21) Application number: 09722752.4
(22) Date of filing: 19.03.2009
(51) Int. Cl.: G08G 1/09, G01C 21/00, G08G 1/14, H04W 4/04, H04W 4/06

(54) **DELIVERY SYSTEM AND IN-VEHICLE DEVICE**

(30) Priority: 19.03.2008 JP 2008072281
(71) Applicant: Kabushiki Kaisha Kenwood, Hachiouji-shi Tokyo 192-8525 (JP)
(72) Inventor: SUZUKI, Hiroyuki, Yokohama-shi Kanagawa 222-0033 (JP); HOTTA, Nobuyuki, Hachiouji-shi Tokyo 193-0834 (JP); SHIMOSHIMANO, Hideo, Tokyo 146-0095 (JP); OGURA, Takuya, Hachiouji-shi Tokyo 192-0362 (JP)
(74) Representative: Busch, Thomas
(86) International application number: PCT/JP2009/055412
(87) International publication number: WO 2009/116617

(57) **Abstract**

In a distribution system comprising a center apparatus (30) for transmitting content information and a vehicle-mounted device (10) for receiving the content information, the vehicle-mounted device (10) has a cancel button (B1) for instructing to discontinue the reception of the content information and a control unit for transmitting, to the center apparatus (30), control information causing discontinuation of the transmission of the content information when the instruction to discontinue the reception is provided by the cancel button (B1), and the center apparatus (30) has a control unit for discontinuing the transmission of the content information based on the control information (characteristic information of the vehicle-mounted device (10), reception discontinuation notification information) transmitted from the vehicle-mounted device (10). The transmission of the content information by the center apparatus can be discontinued at the vehicle-mounted device, which improves user convenience in receiving the content information.

## Description

### TECHNICAL FIELD

The present invention relates to a distribution system for distributing content information and a vehicle-mounted device for receiving the distributed content information.

### BACKGTOUND ART

In recent years, it has become possible for vehicle-mounted devices such as navigation systems to carry out a short wireless communication with a roadside apparatus provided on the road and receive the information from a center apparatus via the roadside apparatus by utilizing the DSRC (Dedicated Short Range Communication) (for example, Patent Documents 1 and 2 are referred).

In the system using such a vehicle-mounted device, the two-way communication between the vehicle-mounted device mounted in the vehicle and the roadside apparatus is allowed only when the vehicle is within the communication range of the roadside apparatus and, during this period, the center apparatus distributes the content information (e.g., information of shops and medical facilities nearby, advertisements, and the like) via the roadside apparatus.
Patent Document 1: JP Patent Application Publication No. 2001-101578
Patent Document 2: JP Patent Application Publication

### DISCLOSURE OF THE INVENTION

### PROBLEMS TO BE SOLVED BY THE INVENTION

In the distribution system described above, however, since the content information is transmitted in unidirectional from the center apparatus to the vehicle-mounted device which has entered the communication area of the roadside apparatus, the vehicle-mounted device can only receive the transmitted content information and therefore cannot discontinue the transmission of the content information from the roadside apparatus. In particular, in case where the volume of the transmitted content information is large, it will take long time to receive it. Therefore, while there may be a case where the user wants to discontinue the reception of the content information, the user has to wait until the reception is completed.

To address the problem above, the object of the present invention is to allow the vehicle-mounted device to discontinue the transmission of the content information from the center apparatus and, thereby, improve the convenience at the user in receiving the content information.

### MEANS FOR SOLVING THE PROBLEMS

The first aspect of the present invention is directed to a distribution system for distributing content information. The distribution system of the present invention comprises a center apparatus for transmitting the content information and a vehicle-mounted device for receiving the content information. The vehicle-mounted device comprises an operation means for instructing to discontinue a reception of the content information; and
a first control means for transmitting control information to the center apparatus when an instruction to discontinue the reception of the content information is provided from the operation means, the control information causing discontinuation of a transmission of the content information, and the center apparatus comprises a second control means for discontinuing the transmission of the content information based on the control information transmitted from the vehicle-mounted device

In the distribution system of the present invention, preferably, the first control means of the vehicle-mounted device is operative to, when the instruction to discontinue the reception of the content information is provided from the operation means, initialize a status of a communication with the center apparatus, change characteristic information indicating equipment characteristics of the vehicle-mounted device, and transmit the changed characteristic information as the control information to the center apparatus, and the second control means of the center apparatus is operative to discontinue the transmission of the content information to the vehicle-mounted device according to the characteristic information received from the vehicle-mounted device.

In the distribution system, preferably, the first control means of the vehicle-mounted device is operative to transmit, to the center apparatus, information indicating a capacity shortage of a storage means for storing the content information as the characteristic information, and the second control means of the center apparatus is operative to discontinue the transmission of the content information to the vehicle-mounted device when the characteristic information indicating the capacity shortage of the storage means is received from the vehicle-mounted device.

Further, the first control means of the vehicle-mounted device may be operative to rewrite a memory capacity as the characteristic information to 0, the memory capacity indicating a storable volume for the content information in the storage means, and transmit the characteristic information to the center apparatus, and the second control means of the center apparatus is operative to discontinue the transmission of the content information to the vehicle-mounted device when the characteristic information with the memory capacity being 0 is received from the vehicle-mounted device.

Furthermore, the first control means of the vehicle-mounted device may be operative to transmit reception discontinuation notification information as the control information to the center apparatus, the reception discontinuation notification information indicating the discontinuation of the reception of the content information, and the second control means of the center apparatus is operative to discontinue the transmission of the content inform2ation to the vehicle-mounted device when the reception discontinuation notification information is received from the vehicle-mounted device.

Another aspect of the present invention is directed to a vehicle-mounted device that receives content information transmitted from a center apparatus. The vehicle-mounted device of the present invention comprises an operation means for instructing to discontinue a reception of the content information; and a control means for transmitting control information to the center apparatus when an instruction to discontinue the reception of the content information is provided from the operation means, the control information causing discontinuation of a transmission of the content information.

In the vehicle-mounted device of the present invention, preferably, the control means of the vehicle-mounted device is operative to, when the instruction to discontinue the reception of the content information is provided from the operation means, initialize a status of a communication with the center apparatus, change characteristic information indicating equipment characteristics of the vehicle-mounted device, and transmit the changed characteristic information as the control information to the center apparatus.

Further, preferably, the control means of the vehicle-mounted device is operative to transmit, to the center apparatus, information indicating a capacity shortage of a storage means for storing the content information as the characteristic information.

Further, the control means of the vehicle-mounted device may be operative to rewrite a memory capacity as the characteristic information to 0, the memory capacity indicating a storable volume for the content information in the storage means, and transmit the characteristic information to the center apparatus.

Furthermore, in the vehicle-mounted device, the control means of the vehicle-mounted device may be operative to transmit reception discontinuation notification information as the control information to the center apparatus, the reception discontinuation notification information indicating the discontinuation of the reception of the content information.

### ADVANTAGE OF THE INVENTION

According to the present invention, the transmission of the content information from the center apparatus can be discontinued by the vehicle-mounted device, which allows for the improvement of the convenience at the user in receiving the content information.

### BRIEF DESCRIPTION OF THE DRAWINGS

Fig.1 shows a schematic diagram of a distribution system according to the first embodiment.
Fig.2 shows a diagram for illustrating a roadside apparatus and a roadside area.
Fig. 3 shows an example of a data structure of content information.
Fig.4 shows a diagram for illustrating the outline of each ID information.
Fig. 5 shows a schematic diagram of a vehicle-mounted apparatus 10.
Fig.6 shows a functional schematic diagram of a center apparatus.
Fig.7 shows a flow diagram of the process among the center apparatus, the roadside apparatus and the vehicle-mounted apparatus when the content information is distributed, according to the first embodiment.
Fig.8 shows an example of a window that is displayed at step S10.
Fig.9 shows a flow diagram of the process among the center apparatus, the roadside apparatus and the vehicle-mounted apparatus when the content information is distributed, according to the second embodiment.

### EXPLANATION OF THE REFERENCES

1: car navigation section
1a: car navigation control unit
1b: current location detection unit
1c map storage unit
1d: input unit
1e: display unit
1f: storage unit
1g: audio output unit
2: communication module
3: DSRC section
3a: DSRC control unit
3b: communication unit
3c: storage unit
3d: ETC processing unit
3e: IC card I/F
4: control section
10: vehicle-mounted device
20: roadside apparatus
20a: main unit
20b: antenna
30: center apparatus
31: control section
32: input section
33: display section
34: storage section
35: communication section
100: distribution system
B1: cancel button
C: vehicle
E1: reception status indication region
G1: window
M: uplink information storage region
N: network
Z: roadside area

### DESCRIPTION OF THE PREFERRED EMBODIMENTS

### [First Embodiment]

First, the arrangement of the embodiment will be explained.

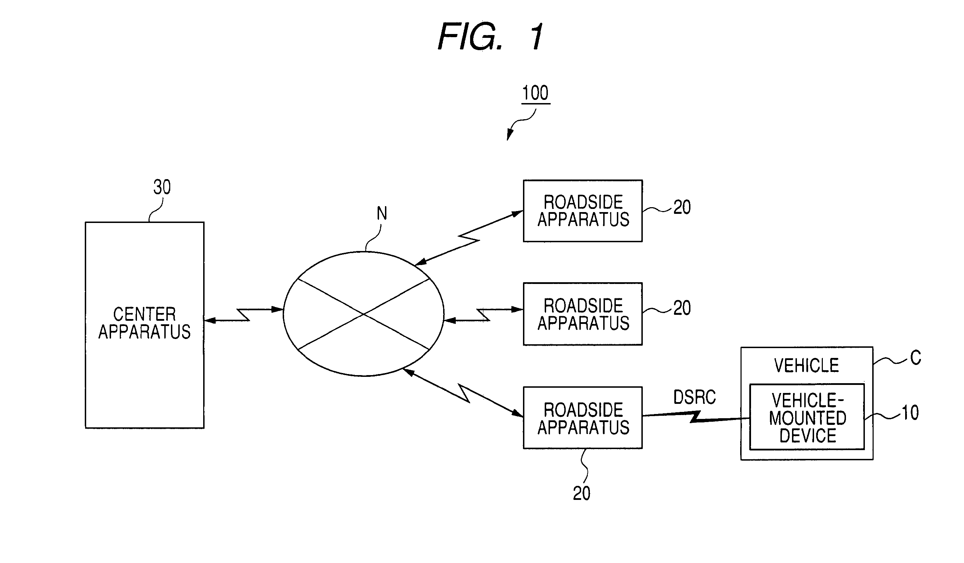

Fig.1 shows a schematic diagram of a distribution system 100 according to the first embodiment.

As shown in Fig.1, the distribution system 100 includes a vehicle-mounted device 10 mounted in a vehicle C, a roadside apparatuses 20, and a center apparatus 30, in which the center apparatus 30 transmits the content information to the vehicle-mounted device 10 via the roadside apparatus 20.

The roadside apparatuses 20 may be provided on roads, in parking lots, and the like, and each roadside apparatus 20 is connected to the center apparatus 30 over the network N. Further, the roadside apparatus 20 and the vehicle C can wirelessly communicate to each other.

It is noted that the content information, the details of which such as data format will be explained later, may be a content (e.g., text information, image information, audio information) such as an advertisement of a shop, a guide about a parking lot and a medical facility, and may also be information regarding a business provider providing the content information, information of the term of validity for the content information (e.g., the date and time of the beginning and end of the term of validity), information of an object point where the service can be provided (e.g., a latitude and longitude, a name of the shop, and the like designating the location of the shop being advertised). For example, if the information of the destination is included in the content information, the latitude and longitude information may be stored, while, if the information of the destination is not included in the content information, the latitude and longitude information is not necessary and no information is stored in the data region for indicating the information. In addition, the followings may be stored as the content information: a reproduction point where a popup reproduction should be provided to notify the content information (e.g., a latitude and longitude designating the reproduction point of the popup, information specifying the road type and/or the approaching direction of the vehicle to reproduce the popup), transition information of the window for the content (e.g., the information specifying the window to be displayed next), taste information, and the like.

While Fig.1 depicts one center apparatus 30 only, there may be a plurality of the distributing entities that transmit the content information, and the center apparatus 30 may be provided for each distributing provider.

Each apparatus will be explained in detail below.

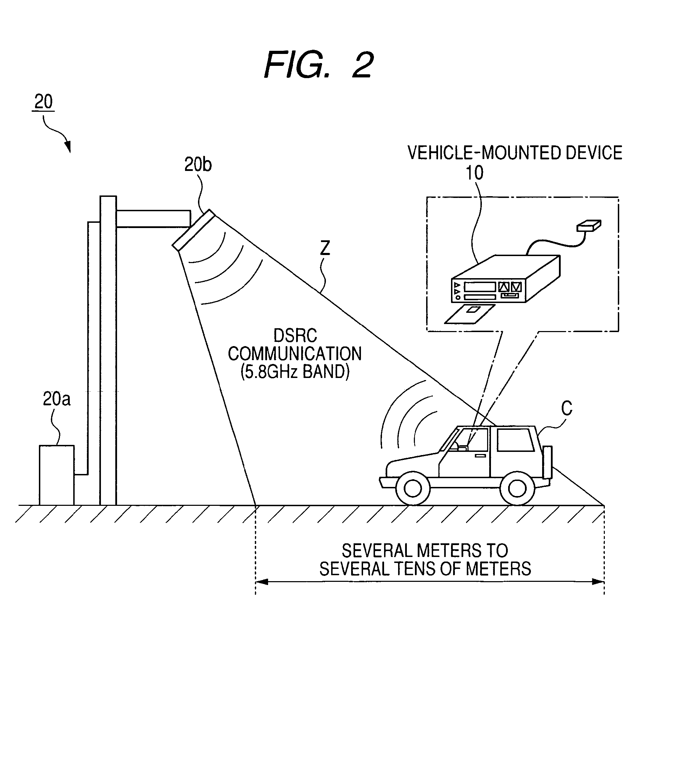

As shown in Fig.2, the roadside apparatus 20 comprises a main unit 20a and an antenna 20b. The roadside apparatus 20 radiates the radio wave of the DSRC with limited reachable distance from the antenna 20b that is provided beside the road, above the road, beside the parking lot, and the like, and thereby forms a roadside area Z near the roadside apparatus 20. The roadside apparatus 20 can have the two-way short wireless communication only with the vehicle-mounted device 10 of the vehicle C within the roadside area Z. Hereafter, the short wireless communication between the roadside apparatus 20 and the vehicle-mounted device 10 may be referred to as "road-vehicle communication".

The DSRC is a communication system that uses the radio wave of 5. 8GHz band, and its communication range is several meters to several tens of meters, for example.

The main unit 20a carries out the process for intermediating the transaction of the information between the vehicle-mounted device 10 and the center apparatus 30. That is, main unit 20a forwards the information received from the vehicle-mounted device 10 to the center apparatus 30 via the antenna 20b, and forwards the content information transmitted from the center apparatus 30 to the vehicle-mounted device 10. As a main unit 20a, any computer terminal may be applied that comprises a control unit, a storage unit, and so on for carrying out the information processing and the communication control. It is noted that, while the main unit 20a here is described as a unit separated from the center apparatus 30, the main unit 20a may have a part of or all of the function of the center apparatus 30.

The vehicle-mounted device 10 is mounted in the vehicle C and has the navigation function for carrying out the process to guide the vehicle C to its destination, and also has the function for carrying out the process to use the ETC (Electronic Toll Collection System) by the DSRC.

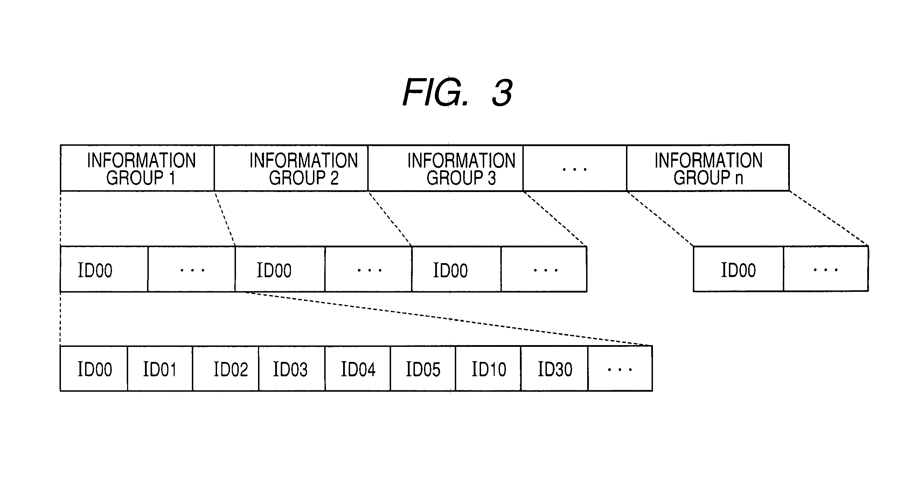

Fig.3 shows an example of the data structure of the content information distributed (transmitted) from the center apparatus 30 to the vehicle-mounted apparatus 10 via the roadside apparatus 20.

As shown in Fig.3, one or more information groups are distributed from the center apparatus 30, and the vehicle-mounted device 10 may receive and store these information groups. Here, each of information groups 1, 2, ... n shown in Fig.3 is the content information, and the reproduction process is carried out in the unit of content information at the vehicle-mounted device 10.

As shown in Fig.3, each information group has the information characterized by a plurality of elements categorized according to the content of the information, and corresponds to one or a few pages of the contents to be displayed on the car navigation.

Each element comprises ID numbers (00, 01,...) and actual data to be stored corresponding to respective ID numbers. Fig.3 illustrates that the information defined by ID00 (indicating that the ID number is "00", and the same applies hereafter), ID01, ID02, ID03, ID04, ID05, ID10, ID30 ... may be included in the content information making up information group 1.

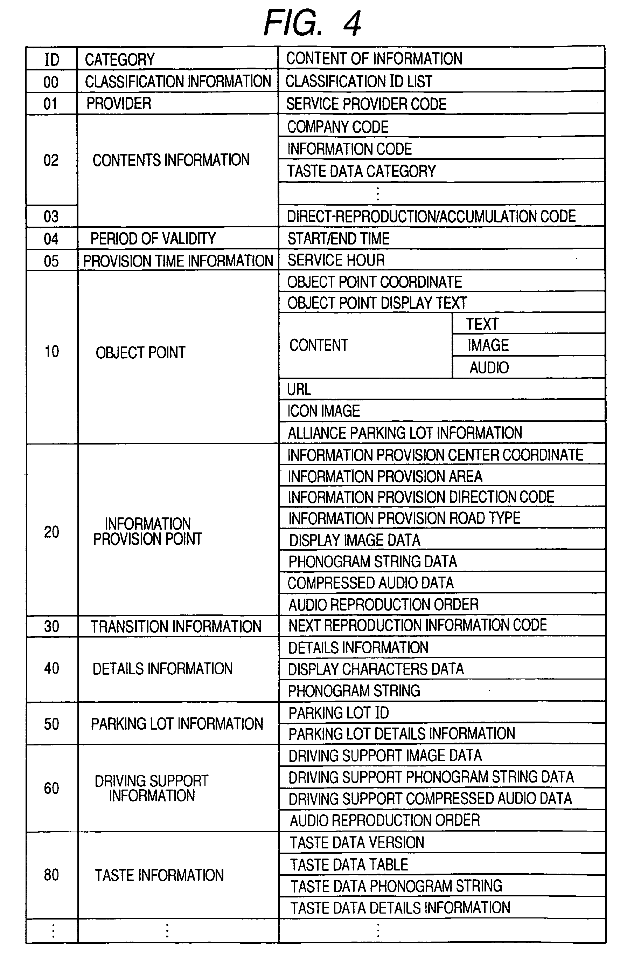

Fig.4 shows the outline of the information of each ID.

As shown in Fig.4, the contents in the information are categorized on an ID basis.

It is noted that header information (not shown) is contained in the information corresponding to each ID included in the information group. The followings are stored as the header information: information, a flag, and the like indicating the content corresponding to each ID, such as information bite indicating the amount of the information included in each ID.

The information of "ID00" represents a list of IDs that is contained in the information group. By checking the presence of each ID in ID00, it can be immediately determined whether or not each intended ID exists. Here, respective information groups do not necessarily have all the IDs, and therefore has the necessary ID(s) only. For example, some information groups may have the information characterized by ID00-ID05, while other information groups may have the information characterized by ID00-ID05, ID10, and ID30. It is noted that ID00, ID01, and ID02 are of fundamental information, and thus all the information groups have the information for these IDs.

The information of "ID01" represents the information regarding the service provider. For example, it may be a service provider code uniquely provided to the service provider. In addition, the followings may also be stored as the text information regarding the service provider: a service provider indication text and/or a service provider phonogram string that may be used when the user of the vehicle-mounted device 10 is notified of the service provider and/or the service name by voice.

The information of "ID02" represents the details information of the content. For example, the details information of the content may be a company code indicating the source of the contents that is allocated by the service provider, an information code in which the service provider is uniquely allocated on the basis of information group (content information) and that is used for the transition information of ID30 described later, a taste data category representing the code indicating the category of the taste information which the content information belongs to, and the like. In addition, the followings may be stored as the details information of the content of ID02: a company indication text that is used when the user is notified of the text information regarding the company that is the source of the content information distributed by the service provider, a company phonogram string that is used in the notification by voice, and the like.

The information of "ID03" represents the information of the condition for reproduction of the content distributed by ID10. For example, the information may be an direct-reproduction/accumulation code as an identifier indicating whether the received content should be stored as an available content even outside the communication area, or should be reproduced immediately after the reception, a reproduction condition code as the identifier defining the action to be taken when the designated content cannot be reproduced within the area defined at the information provision location, and the like.

The information of "ID04" represents the information regarding the term of validity of the content information. For example, the beginning year, month, date, hour and minute, and/or the terminating year, month, date, hour and minute of the received content information are indicated in the unit of second.

The information of "ID05" represents the service hours and/or the service available time of the shop indicated by ID10.

The information of "ID10" represents the information regarding an object point. The object point refers to the shop and/or the facility where the service is provided. The information of the object point comprises an object point coordinate (latitude and longitude) indicating the position of the object point, an object point indication text indicating the name of the object point, a content of text, image or audio, a URL when the information of the object point is provided by the IP communication, an icon image that is used when the object point is displayed on the map, and actual data of the information and content regarding the point of the alliance parking lot. It is noted that, in case of the content information of non-existing object point, the information to explain the window transition may be stored.

The information of "ID20" represents the information regarding a service providing area (information provision point) where the popup of the content is intended to be reproduced. For example, it comprises an information provision central coordinate indicating the latitude and longitude where the popup information is reproduced, an information provision area indicating the radius information with respect to the central coordinate, an information provision direction code indicating the information provision direction that the popup information is reproduced, information provision road type indicating the road type, displayed image data and phonogram string data as the static image data for the popup-reproduction, compressed audio data, an audio reproduction order indicating the order of reproducing the audio data to be popup-reproduced, and the like. That is, the content that is actually popup-reproduced and notified to the user is the display image data or the audio data of ID20.

The information of "ID30" represents the transition information (the information for designating the window to be displayed (transitioned) next). For example, it comprises a subsequent reproduction information code indicating the information code that is subsequently transited to.

The information of "ID40" represents the details information regarding the content of ID10 that is referred to as details information, which is used to achieve the simultaneous search in multiple dictionaries. For example, it comprises details information in which the text information for explaining the subject of the content is stored, character data for the display to guide the service object point and/or the window transition, a phonogram string to be informed to the user by voice, and the like.

The information of "ID50" represents the parking lot information regarding a pre-registered parking lot. For example, the information may be a parking lot ID of the pre-registered parking lot in the information distribution apparatus, full/vacancy information, and the like. The full/vacancy information is the information indicating the status of full or vacancy, or the availability such as an occupancy rate.

The information of "ID60" represents the driving support information that will be an assist for the drive within the premise, such as a guide for a merging/branch and/or a speed limit around the exit of the parking lot/within the parking lot. For example, the information may be an image for the driving support, and/or a phonogram string, a compressed audio, and/or a reproduction order of the audio that is used to provide the audio guide to inform the user of the content in the information by utterance when this content is received, and the like.

The information of "ID80" represents the taste data utilized to select the content to be distributed according to the taste of the user, in which the contents distributed by the service provider are categorized into 96 items in maximum. For example, the information comprises version information of a table of the taste data, text information for display, a phonogram string, details information, and the like, defined by this version information.

It is noted that, in addition to the above, different number of ID may be provided to define new information content.

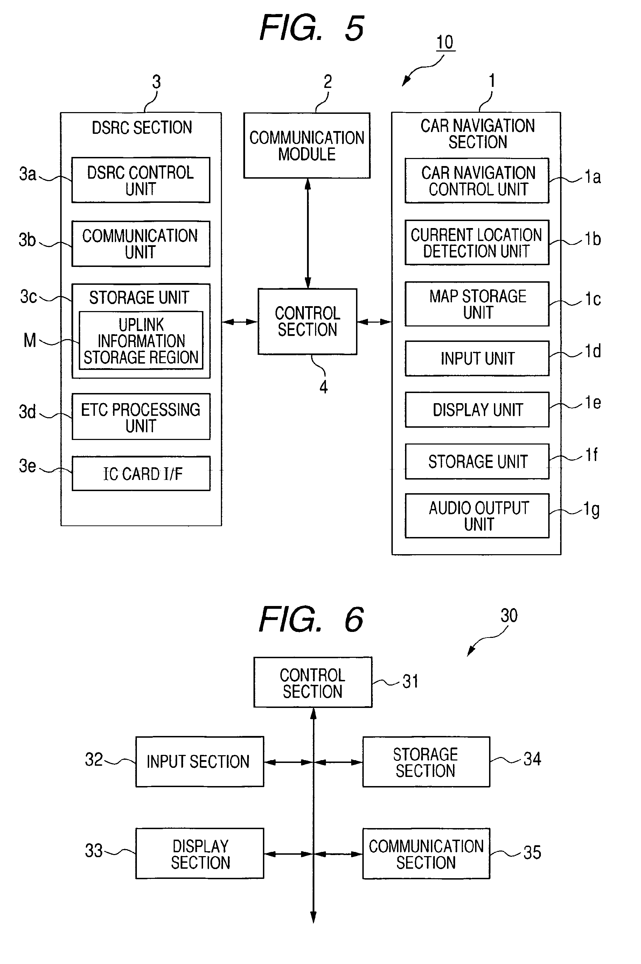

Fig.5 shows a schematic diagram of the vehicle-mounted device 10 in the first embodiment.

As shown in Fig.5, the vehicle-mounted device 10 comprises a car navigation section 1, a communication module 2, a DSRC section 3, and a control section 4. It is noted that the vehicle-mounted device 10 comprises a communication section connectable to the Internet.

The car navigation section 1 comprises a car navigation control unit 1a, a current location detection unit 1b, a map storage unit 1c, an input unit 1d, a display unit 1e, a storage unit 1f, and an audio output unit 1g, and carries out the process for calculating a route from the current location of the vehicle C to the destination and guiding the vehicle C to the destination according to this route.

Based on the position information of the current location detected by the current location detection unit 1b and the map information stored in the map storage unit 1c, the car navigation control unit 1a calculates the route from the current location of the vehicle C to the destination that has been set via the input unit 1d. Then, the car navigation control unit 1a generates a map window for guiding the vehicle C along the route calculated from the map information stored in the map storage unit 1c and causes the display unit 1e to display it.

The current location detection unit 1b comprises various sensors such as a GPS antenna, an angle sensor, an azimuth sensor, an distance sensor, and the like. The current location of the vehicle C is detected based on the search result by these sensors. The GPS antenna detects the GPS signal transmitted from the GPS satellite. The angle sensor detects the acceleration (the rotating speed toward the horizontal direction per the unit time) of the vehicle that indicates the amount of the change in the moving direction and detects the terrestrial magnetism to detect the absolute azimuth of the vehicle. The current location detection unit 1b generates the position information (the information of the latitude, the longitude, and the like) indicating the current location of the vehicle based on each detection result obtained by these sensors, and outputs it to the car navigation control unit 1a.

The map storage unit 1c comprises a storage medium such as a memory, a DVD, and the like, and stores map information necessary to a guide window, guide information (e.g., road information, traffic congestion information) that is received via the communication module 2, and the like.

The input unit 1d may be keys for operation, a touch screen panel integrated with the display unit 1e, and the like. The input unit 1d generates the operational signals corresponding to the operations. The input unit 1d functions as an operation means.

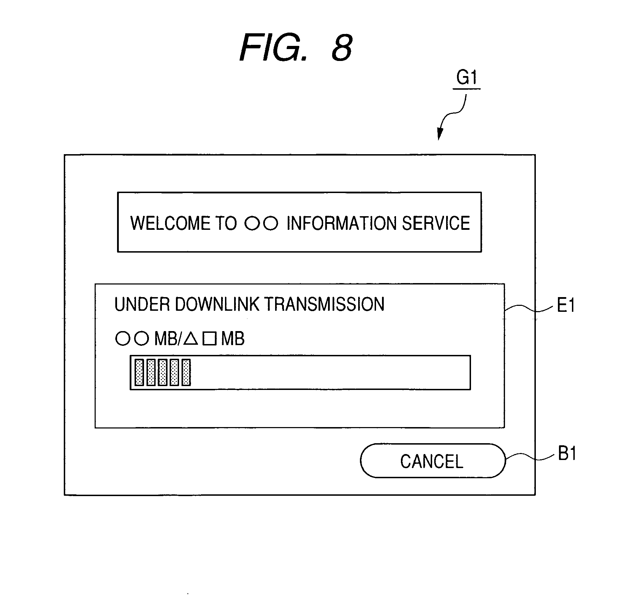

The display unit 1e comprises a display screen to display various information on the display screen according to the control by the control section 4. For example, the display unit 1e displays a setting window and/or a map window, various windows such as a content window of the content information received from the center apparatus 30, and/or a window on which a cancel button B1 is displayed (Fig.8 is referred). The display unit 1e functions as a display means.

The storage unit 1f comprises a memory to store a control program to be executed by the control section 4 and/or the car navigation control unit 1a, a parameter and/or data necessary to execute the program. The storage unit 1f functions as a storage means for storing multiple pieces of the content information (information groups) wirelessly received from the center apparatus 30 via the roadside apparatus 20.

The audio output unit 1g comprises an audio processor, a D/A convertor, an amplifier, a loudspeaker, and so on. The audio output unit 1g converts the audio data instructed from the control section 4 into the analog signal by the D/A convertor to output the audio by the loudspeaker. Further, the audio output unit 1g generates the synthetic audio signal by the audio processor based on the phonogram string data instructed from the control section 4 and outputs the audio by the loudspeaker.

The communication module 2 comprises antennae for the optical communication, for the EM communication, and for 2.4 GHz radio wave communication, respectively, and performs various communications such as the optical communication, the FM communication, and the radio wave communication with the communication center. For example, the communication module 2 receives the congestion information and the traffic information from the communication center, and outputs it to the control section 4. It is noted that the VICS center may be an example of the communication center, but it is not limited thereto, and that the information received from the communication center is not limited to the congestion information and the traffic information.

The DSRC section 3 comprises a DSRC control unit 3a, a communication unit 3b, a storage unit 3c, an ETC processing unit 3d, and an ID card I/F 3e, and carries out the process for utilizing the ETC by the DSRC and/or the communication process for receiving the content information from the center apparatus 30.

The DSRC control unit 3a comprises a CPU, a RAM, and so on, and controls the operation of each unit in the DSRC section 3 by cooperating with the control program stored in the storage unit 3c. For example, when making a payment by the ETC, the DSRC control unit 3a controls the communication operation of the communication unit 3b to transmit/receive the payment information to/from the ETC base station (the radio base station provided near the ETC gate for making the ETC payment). Further, the DSRC control unit 3a causes the ETC processing unit 3d to carry out the writing process of the payment information.

Further, when receiving the content information by the communication unit 3b from the center apparatus 30 via the roadside apparatus 20, the DSRC control unit 3a causes the communication unit 3b to transmit the information stored in the uplink information storage region M in the storage unit 3c to the roadside apparatus 20 according to the instruction by the control section 4. On the other hand, when having received the content information by the communication unit 3b via the roadside apparatus 20, the DSRC control unit 3a outputs it to the control section 4.

The communication unit 3b comprises an antenna fixed to a position, for example, on the dashboard and near the windshield of the vehicle C, and transmits/receives the radio wave of the DSRC to/from the roadside apparatus 20 and/or the ETC base station via the antenna.

The storage unit 3c stores the control program to be executed by the DSRC control unit 3a. Further, the uplink information storage region M is provided to the storage unit 3c. The uplink information storage region M is a storage region dedicated to provide the information to the center apparatus 30, in which uplink information as well as characteristic information of the vehicle-mounted device 10 may be stored.

The characteristic information is the information regarding an equipment characteristic of the vehicle-mounted device 10. The characteristic information includes a vehicle-mounted device ID indicating the identification information individually assigned to the vehicle-mounted device 10, a supported language indicating the languages that can be supported by the vehicle-mounted device 10, a geographic measurement system of the map, supportable copy right management information, a resolution of the display screen of the display unit 1e, SVG (Scalable Vector Graphics) support, a memory capacity indicating the storable volume for the content information to be stored in the storage unit 1f, and the like.

The uplink information is the information that is used at the center apparatus 30 to select the content information to be transmitted. The uplink information includes information for identifying the service provider that has been subscribed by the user regarding the distribution of the content information, destination information of the vehicle C, route information, cumulative mileage information, information of a past stop over point, user taste information, history information of reception and reproduction, and the like. The uplink information is generated by the control section 4 for each service provider with the content depending on the service provider, and is always updated by the control section 4 to contain the latest content.

The information for identifying the service provider is the information for identifying the service provider that has been subscribed by the user regarding the distribution of the content information, such as an provider code, an provider name, and the like.

The destination information of the vehicle C is the information of the latitude and longitude of the destination that has been set by the car navigation section 1, and the route information is the information of the latitude and longitude of the point to be routed according to the route guide to the destination that has been set by the car navigation section 1. The cumulative mileage information is the information of the cumulative mileage experienced by the vehicle C from the time of setup (startup) of the DSRC section 3 to the present time, and the past stop over point is the latitude and longitude information of the point where the vehicle C stopped in the past (i.e., the power of the vehicle-mounted device 10 was turned on or off) and the time information.

The taste information is the information that is used at the center apparatus 30 to select the content corresponding to the user taste. The taste information includes information indicating whether or not the user prefers the content with respect to each of a plurality of categories that the contents are categorized into. This category indicates the categories of the contents such as "living", "shopping", and the like, which can be set by the service provider.

The history information of the reception and reproduction is the information code that is provided with the content information distributed from the center apparatus 30 and the history information of reproducing it. The history information includes an information code of the content information among of the received content information which was actually displayed on the display unit 1e and reproduced, for example. The history information may also include the latitude and longitude information and the time information when the content was reproduced.

The ETC processing unit 3d reads/writes the payment information from/to the IC-attached credit card or debit card that may be inserted into and removed from the IC card I/F 3e.

The IC card I/F 3e comprises a slot for, e.g., the above credit card, and intermediates the transaction of the information between the IC of the credit card inserted into the slot and the ETC processing unit 3d.

The control section 4 comprises a CPU (Central Processing Unit), a RAM (Random Access Memory), and so on, and carries out various operations by cooperating with the control program stored in the storage unit 1f, and also carries out the centralized control for each unit. For example, the control section 4 controls the communication operation of the DSRC unit 3 when carrying out the road-vehicle communication with the roadside apparatus 20. It is noted that the control section 4 controls the DSRC section 3 by cooperating with the DSRC control unit 3a of the DSRC section 3. Further, the control section 4 controls the saving and reproducing of the content information received from the center apparatus 30 via the DSRC section 3.

Further, the control section 4 in the first embodiment functions as a first control means for transmitting, to the center apparatus 30, the control information causing discontinuation of the transmission of the content information, when the instruction to discontinue the reception of the content information is provided by the input unit 1d. The control section 4 in the first embodiment initializes the status of the communication with the center apparatus and transmit, to the center apparatus 30, the characteristic information as the control information in which the equipment characteristics has been changed when the instruction to discontinue the reception of the content information is provided. In particular, the changed characteristic information in the first embodiment refers to the information indicating the capacity shortage of the storage unit 1f storing the content information, e.g. , the information in which the memory capacity indicating the storable volume of the content information in the storage unit 1f is rewritten to 0.

Next, the center apparatus 30 will be explained.

Fig.6 shows a functional schematic diagram of the center apparatus 30.

As shown in Fig. 6, the center apparatus 30 comprises a control section 31, an input section 32, a display section 33, a storage section 34, and a communication section 35, and distributes the content information stored in the storage section 34 to the vehicle-mounted device 10 via the roadside apparatus 20.

The control section 31 comprises a CPU, a RAM, and so on. The control section 31 carries out various operations by cooperating with the control program stored in the storage section 34, and carries out the centralized control for each section.

For example, the control section 31 reads out the content stored in the storage section 34 to organize it, and carries out the transmission control of the organized content information. It is noted that the term "organize" here refers to select the content to be transmitted and construct the selected content into the data structure according to the format for distribution as shown in Figs. 3 and 4.

Further, the control section 31 in the first embodiment distributes the content information based on the control information (characteristic information) transmitted from the vehicle-mounted device 10. If the control section 31 receives the characteristic information indicating the capacity shortage of the storage unit 1f, e.g. , if the control section 31 receives the characteristic information in which the memory capacity is 0, it functions as a second control means for discontinuing the transmission of the content information to that vehicle-mounted device 10.

The input section 32 comprises, e.g., a keyboard to accept the input operation, and outputs the operation signal corresponding to this operation input to the control section 31.

The display section 33 comprises a display screen and displays various windows on the display screen according to the window control by the control section 31.

The storage section 34 stores the program to be executed by the control section 31 and various data necessary for the execution of the program. Further, the storage section 34 stores the content to be distributed.

Further, when the user makes a contract to subscribe the distribution service of the content information, in order to register the user as a member, the storage section 34 stores the identification such as a user name, an address, and the like of the registered user, and also stores the information such as the vehicle-mounted device ID of the vehicle-mounted device 10 owned by the user into a database on a user basis.

The communication section 35 comprises an interface for communication to carry out the DSRC communication with the roadside apparatus 20 and performs the communication process according to the communication control by the control section 31.

Next, the operation will be explained.

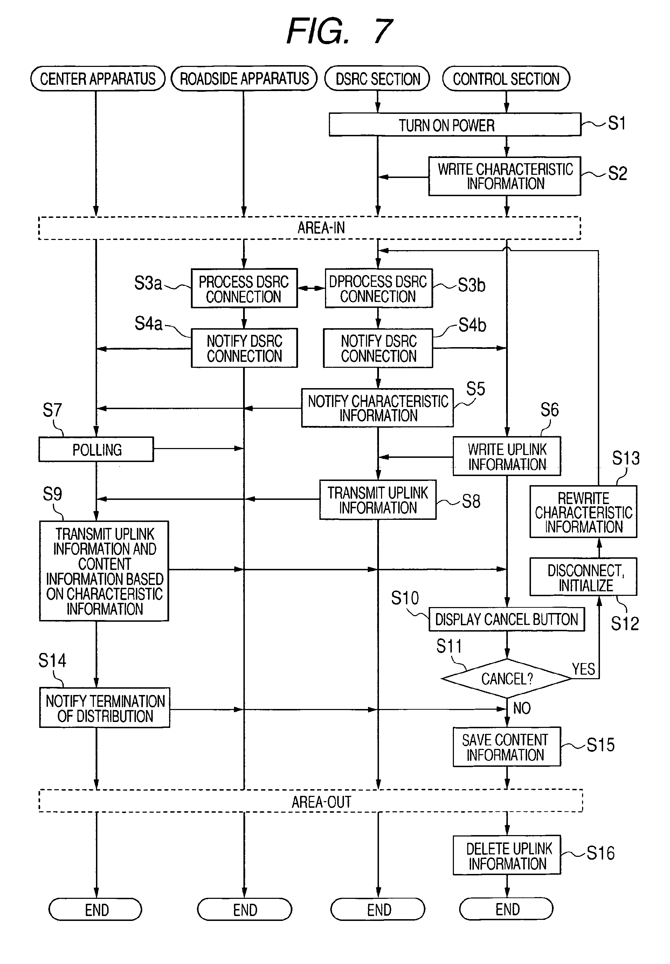

Fig.7 shows a flow diagram of the process among the center apparatus 30, the roadside apparatus 20 and the vehicle-mounted apparatus 10 when the content information is distributed, according to the first embodiment.

First, when the engine of the vehicle C is started up and the power of the vehicle-mounted device 10 is turned on (step S1), the control section 4 generates the characteristic information of the vehicle-mounted device 10 and writes it to the uplink information storage region M of the storage unit 3c (step S2). The characteristic information is obtained by inquiring each unit such as the display unit 1e, the storage unit 1f, for example, or by reading out the information that has been stored in the storage unit 1f, and is written to the corresponding region of the uplink information storage region M. It is noted that, in practice, the control information to instruct the writing is outputted to the DSRC control unit 3a and this DSRC control unit 3a writes it to the uplink information storage region M.

Afterward, when the vehicle C starts driving and enters the roadside area Z of the roadside apparatus 20 (area-in), the roadside apparatus 20 detects the vehicle C and starts the connection process by the DSRC communication with the DSRC section 3 of the vehicle-mounted device 10 (steps S3a, S3b). That is, upon transmitting the DSRC radio wave and obtaining the response from the vehicle-mounted device 10, the roadside apparatus 20 establishes the communication path. Upon establishing the communication path, the roadside apparatus 20 transmits to the center apparatus 30 the notification information indicating that the connection has been completed (step S4a). On the other hand, the DSRC section 3 of the vehicle-mounted device 10 outputs to the control section 4 the notification information indicating that the connection has been completed (step S4b). It is noted that, at the time of the DSRC connection, the vehicle-mounted device ID for identifying the vehicle-mounted device 10 that has been stored in the storage unit 3c of the vehicle-mounted device 10 has already been transmitted to the center apparatus 30.

Then, when the roadside apparatus 20 requests the transmission of the characteristic information from the DSRC section 3 of the vehicle-mounted device 10, the DSRC section 3 then transmits to the roadside apparatus 20 the characteristic information that has been written in the uplink information storage region M of the storage unit 3c (step S5). The characteristic information is transmitted to the center apparatus 30 via the roadside apparatus 20. Then, the control section 4 generates the uplink information and writes it to the uplink information storage region M (step S6).

The center apparatus 30 periodically polls the vehicle-mounted device 10 (step S7) and requests the uplink information that has been written in the uplink information storage region M.

The DSRC section 3 of the vehicle-mounted device 10 transmits, to the center apparatus 30 via the roadside apparatus 20, the uplink information stored in the uplink information storage region M in response to the polling by the center apparatus 30 (step S8).

The center apparatus 30 reads out the content information corresponding to the received characteristic information and the uplink information among the content information stored in the storage section 34, and, based on the memory capacity included in the characteristic information, determines whether or not there is a capacity shortage for storing the content information. If there is no capacity shortage, the center apparatus 30 transmits the readout content information to the vehicle-mounted device 10 (step S9). If there is a memory capacity shortage, for example, if the memory capacity is 0, the center apparatus 30 determines that the transmission of the content information is not allowed and terminates the process without transmitting the content information.

With respect to the content information selected and read out according to the characteristic information and the uplink information, if the supported language information included in the characteristic information is "Japanese" and the category in the taste information included in the uplink information is "foreign film" and/or "animated cartoon", the content information will be the content information that supports the Japanese and belongs to the category of "foreign film" and/or "animated cartoon".

When the control section 4 of the vehicle-mounted device 10 starts receiving the content information from the center apparatus 30, it displays the window indicating a cancel button B1 and reception status (step S10). It is noted that, while the first embodiment illustrates that the window having the cancel button B1 and the reception status is displayed after the reception of the content information is started, the invention is not limited thereto. For example, the window for the cancel button and the window for the reception status may be separated and displayed individually. Further, with respect to the timing of the display, the cancel button may be displayed immediately after the area-in is made and the DSRC is confirmed, without waiting for the start of the reception of the content. This is useful in the case where the user has made the area-in but does not desire the reception of the content.

Fig.8 shows an example of the window that is displayed at step S10.

The window G1 shown in Fig.8 comprises a reception status indication region E1 indicating the information of the reception status and the cancel button B1. On the reception status indication region E1, the followings are displayed: a message indicating that the reception is being made, information indicating the amount of the received information with respect to actual amount of the information of the content information that is being received, an indicator indicating the ratio thereof, and the like. The cancel button B1 is to accept the instruction to discontinue the reception of the content information, and functions as an operation means.

It is noted that, if the subject content information under distribution is for the direct reproduction (if the direct reproduction/accumulation code of ID03 in this content information is "direct reproduction"), the display process in step S10, which would otherwise display the cancel button B1, may proceed to step S14 without displaying the cancel button B1 and thus prevent the discontinuation of the transmission of the content information. Moreover, a time difference (for example, approximately 2-5 seconds) may be set between the time of starting the reception of the content information and the effective time of the generation of the cancel button B1 and the press-down signal of the cancel button B1. If the content information with smaller volume is received, that is, if the reception of the content information is completed within the set time difference, the operation may proceed to step S14 to prevent the transmission discontinuation control of the content information by the cancel button B1.

The control section 4 of the vehicle-mounted device 10 determines whether or not the cancel button B1 on the window displayed at step S10 is pressed down, that is, whether or not the instruction of the discontinuation of the reception is accepted from the input unit 1d (step S11). If the cancel button B1 is pressed down (step S11; Y), the control section 4 outputs to the DSRC section 3 the instruction to disconnect the communication path with the roadside apparatus 20 and the instruction of the initialization (reset) to reset the communication state to the initial state, which results in a state where a temporal area-out is spuriously made (step S12). Then, the memory capacity of the characteristic information is rewritten to 0 (step S13) and the process returns to steps S3a, S3b.

When the center apparatus 30 has distributed all the content information to be distributed, the control section 31 then generates the message information for notifying the end of the distribution and transmits it to the vehicle-mounted device 10 (step S14). This message information indicating the end of distribution is to urge the user to make an area-out, and the vehicle-mounted device 10 displays this message information.

On the other hand, if the cancel button B1 is not pressed down (step S11; N) and the control section 4 of the vehicle-mounted device 10 receives the notification of the end of the distribution, the control section 4 then saves in the storage unit 1f the received content information which the reception was completed (step S15).

Afterward, if the communication with the roadside apparatus 20 is interrupted for a predetermined time, the control section 4 of the vehicle-mounted device 10 determines that the distribution has been terminated, and carries out the control to delete the uplink information (step S16). In response to this control, the DSRC control unit 3a deletes the uplink information in the uplink information storage region M.

In the first embodiment, the memory capacity of the characteristic information is rewritten to 0 so that the center apparatus 30 determines that the content information is not allowed to transmit, which achieves the discontinuation of the transmission of the content information from the center apparatus 30. However, other information included in the characteristic information may be rewritten, for example, the language and/or the resolution may be rewritten to the language and/or the resolution that is not supported by the center apparatus 30 so that the center apparatus 30 can determine that the content information is not allowed to transmit.

As described above, according to the first embodiment, the window having the cancel button B1 is displayed on the display screen when the vehicle-mounted device 10 receives the content information from the center apparatus 30, which allows the user to instruct the discontinuation of the reception of the content information. Also, according to this user instruction, the vehicle-mounted device 10 initializes the status of the communication with the center apparatus 30 via the roadside apparatus 20 to create the state where the temporal area-out is spuriously made (step S12 is referred), and transmits to the center apparatus 30 the characteristic information in which the memory capacity has been forced to be rewritten to 0 (step S13 is referred). Thereby, after the communication between the vehicle-mounted device 10 and the center apparatus 30 is re-established, the characteristic information having the memory capacity being 0 is transmitted in the uplink, and it is determined, at the center apparatus 30, that the content information is not allowed to transmit because the memory capacity of the vehicle-mounted device 10 is 0, and that no distribution of the content information should be made (step S9 is referred). Then, the distribution process of the content information terminates, so that the reception of the content information from the center apparatus 30 can be discontinued.

### [Second Embodiment]

The arrangement of the distribution system according to the second embodiment is the same as that of the first embodiment. When the instruction to discontinue the reception of the content information is provided from the input unit 1d, the control information for discontinuing the transmission of the content information will be reception discontinuation notification information that indicates the discontinuation of the reception of the content information, and thus the operation only is different from the first embodiment. Therefore, the same reference numerals are applied to the same elements, and the different operations only will be explained.

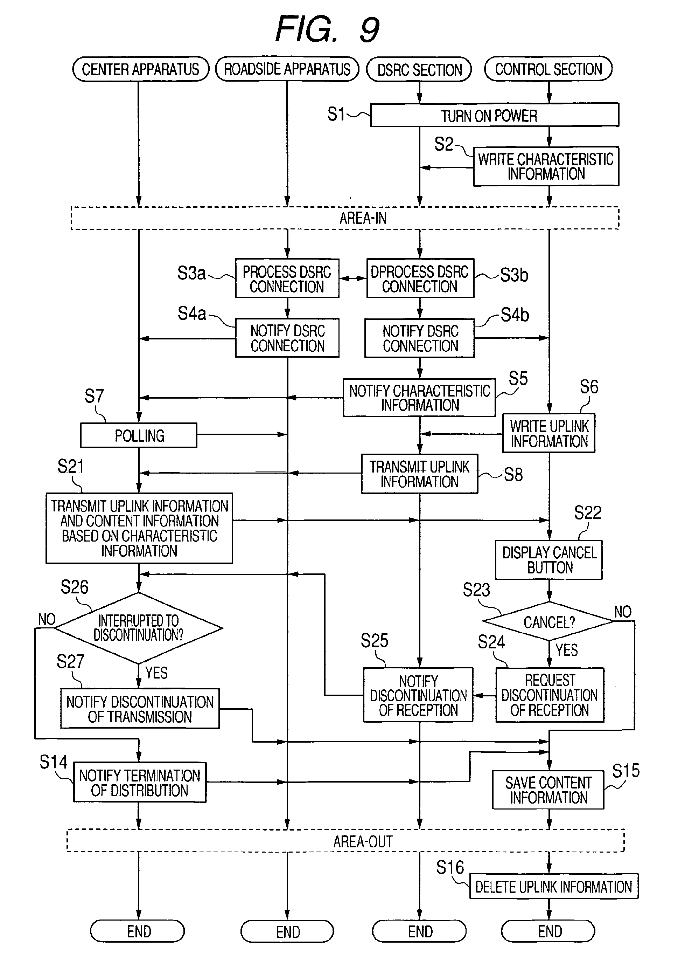

Fig.9 shows a flow diagram of the process among the center apparatus 30, the roadside apparatus 20 and the vehicle-mounted apparatus 10 when the content information is distributed, according to the second embodiment.

The processes in steps S1-S8 and S14-S16 shown in Fig.9 are the same as steps S1-S8 and S14-S16 of the first embodiment that are described by referring to Fig.7. Therefore, the explanations of the processes of steps S1-S8 and S14-S16 will be omitted, and steps S21-S27 of Fig.9 only will be explained that characterize the second embodiment.

The center apparatus 30 reads out the content information corresponding to the received characteristic information and the uplink information among the content information stored in the storage section 34, and transmits the readout content information to the vehicle-mounted device 10 (step S21). The explanation of the content information that is selected and read out according to the characteristic information and the uplink information will be omitted, because it is the same as in the first embodiment.

When the control section 4 of the vehicle-mounted device 10 starts receiving the content information from the center apparatus 30, it displays the window having the cancel button B1 and the reception status (step S22). It is noted that, since the example of the window that is displayed in step S22 is similar to the window shown in Fig.8 in the first embodiment, the illustration and description thereof will be omitted.

The control section 4 of the vehicle-mounted device 10 determines whether or not the cancel button B1 on the window displayed at step S22 is pressed down, that is, whether or not the instruction to discontinue the reception is accepted from the input unit 1d (step S23). If the cancel button B1 is pressed down (step S23; Y), the control section 4 requests the DSRC section 3 to discontinue the reception of the content information (step S24), and the DSRC section 3 transmits to the roadside apparatus 20 the reception discontinuation notification information corresponding to the request for discontinuing the reception (step S25).

The center apparatus 30 receives the reception discontinuation notification information from the roadside apparatus 20, and determines whether or not there is an interruption to the transmission of the content information (step S26). If there is an interruption to the transmission of the content information (step S26; Y), the center apparatus 30 discontinues the transmission of the content information, and the control section 31 generates the message information (transmission discontinuation information) indicating that the transmission of the content information was discontinued and transmits it to the vehicle-mounted device 10. The vehicle-mounted device 10 displays this message information.

If there is no interruption to the transmission of the content information (step S26; N), and when the center apparatus 30 has distributed all the content information to be distributed, the control section 31 generates the message information notifying the end of the distribution and transmits it to the vehicle-mounted device 10 (step S14).

On the other hand, if the cancel button B1 is not pressed down (step S23; N) and the control section 4 of the vehicle-mounted device 10 receives the notification of the end of the distribution, the control section 4 saves the received content information in the storage unit 1f.

As described above, according to the second embodiment, similarly to the first embodiment, when the vehicle-mounted device 10 receives the content information from the center apparatus 30, the window having the cancel button B1 is displayed on the display screen, which allows the user to instruct the discontinuation of the reception of the content information. Also, the vehicle-mounted device 10 transmits this user instruction to the center apparatus 30 as the reception discontinuation notification information, which allows the center apparatus 30 to discontinue the transmission of the content information according to this reception discontinuation notification information.

As described above, according to the first and second embodiments, it is allowed for the vehicle-mounted device 10 to discontinue the transmission of the content information, which allows for the improvement of the convenience at the user in receiving the content information.

## Claims

1. A distribution system comprising a center apparatus for transmitting content information and a vehicle-mounted device for receiving the content information, wherein
the vehicle-mounted device comprises:
operation means for instructing to discontinue a reception of the content information; and
first control means for transmitting control information to the center apparatus when an instruction to discontinue the reception of the content information is provided from the operation means, the control information causing discontinuation of a transmission of the content information, and
the center apparatus comprises:
second control means for discontinuing the transmission of the content information based on the control information transmitted from the vehicle-mounted device.

2. The distribution system according to claim 1, wherein
the first control means of the vehicle-mounted device operates, when the instruction to discontinue the reception of the content information is provided from the operation means, to initialize a status of communication with the center apparatus, to change characteristic information indicating equipment characteristics of the vehicle-mounted device, and to transmit the changed characteristic information as the control information to the center apparatus, and
the second control means of the center apparatus operates to discontinue the transmission of the content information to the vehicle-mounted device according to the characteristic information received from the vehicle-mounted device.

3. The distribution system according to claim 2, wherein
the first control means of the vehicle-mounted device is operative to transmit, to the center apparatus, information indicating a capacity shortage of a storage means for storing the content information as the characteristic information, and
the second control means of the center apparatus is operative to discontinue the transmission of the content information to the vehicle-mounted device when the characteristic information indicating the capacity shortage of the storage means is received from the vehicle-mounted device.

4. The distribution system according to claim 2 or 3, wherein
the first control means of the vehicle-mounted device is operative to rewrite a memory capacity as the characteristic information to 0, the memory capacity indicating a storable volume for the content information in the storage means, and transmit the characteristic information to the center apparatus, and
the second control means of the center apparatus is operative to discontinue the transmission of the content information to the vehicle-mounted device when the characteristic information with the memory capacity being 0 is received from the vehicle-mounted device.

5. The distribution system according to claim 1, wherein
the first control means of the vehicle-mounted device is operative to transmit reception discontinuation notification information as the control information to the center apparatus, the reception discontinuation notification information indicating the discontinuation of the reception of the content information, and
the second control means of the center apparatus is operative to discontinue the transmission of the content information to the vehicle-mounted device when the reception discontinuation notification information is received from the vehicle-mounted device.

6. A vehicle-mounted device that receives content information transmitted from a center apparatus, the vehicle-mounted device comprising:
operation means for instructing to discontinue a reception of the content information; and
control means for transmitting control information to the center apparatus when an instruction to discontinue the reception of the content information is provided from the operation means, the control information causing discontinuation of a transmission of the content information.

7. The vehicle-mounted device according to claim 6, wherein the control means of the vehicle-mounted device operates, when the instruction to discontinue the reception of the content information is provided from the operation means, to initialize a status of communication with the center apparatus, to change characteristic information indicating equipment characteristics of the vehicle-mounted device, and to transmit the changed characteristic information as the control information to the center apparatus.

8. The vehicle-mounted device according to claim 7, wherein the control means of the vehicle-mounted device is operative to transmit, to the center apparatus, information indicating a capacity shortage of a storage means for storing the content information as the characteristic information.

9. The vehicle-mounted device according to claim 7 or 8, wherein the control means of the vehicle-mounted device is operative to rewrite a memory capacity as the characteristic information to 0, the memory capacity indicating a storable volume for the content information in the storage means, and transmit the characteristic information to the center apparatus.

10. The vehicle-mounted device according to claim 6, wherein the control means of the vehicle-mounted device is operative to transmit reception discontinuation notification information as the control information to the center apparatus, the reception discontinuation notification information indicating the discontinuation of the reception of the content information.
